(19) **Europäisches Patentamt**

**European Patent Office**

**Office européen des brevets**

(11) **EP 1 442 864 A1**

(12) **EUROPEAN PATENT APPLICATION**

(43) Date of publication:
**04.08.2004 Bulletin 2004/32**

(51) Int Cl.7: **B29C 45/83**

(21) Application number: **04250415.9**

(22) Date of filing: **27.01.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **29.01.2003 JP 2003019798**<br><br>(71) Applicant: **FANUC LTD**<br>**Minamitsuru-gun, Yamanashi 401-0597 (JP)** | (72) Inventors:<br>• **Nishimura, Koichi**<br>**Susono-shi Shizuoka 410-1115 (JP)**<br>• **Urata, Masahiko**<br>**Minamitsuru-gun Yamanashi 401-0511 (JP)**<br><br>(74) Representative: **Billington, Lawrence Emlyn**<br>**Haseltine Lake,**<br>**Imperial House,**<br>**15-19 Kingsway**<br>**London WC2B 6UD (GB)** |

(54) **Injection molding machine comprising a lubrication device**

(57) An injection molding machine capable of determining which section of a lubrication system is abnormal. By a pump (12) being driven, lubricant is fed from a lubricant tank (11) to a parallel distributor (14-1, 14-2) and a progressive distributor (15) through a switching valve (13). The parallel distributor (14-1, 14-2) and the progressive distributor (15) successively feed lubricant to parts to be lubricated in the injection molding machine. The lubricant pressure near a discharge opening of the pump (12) is detected by a pressure sensor (16) and stored in a storage/arithmetic device (17). The waveform which the detected lubricant pressure describes when lubrication is performed normally is stored as reference data. Time periods corresponding to the individual parts to be lubricated are measured, set and stored. Also a reference range is set. The reference data and the waveform of the lubricant pressure detected after are displayed on a display/input device (18). If the waveform of the detected lubricant pressure is not within the reference range based on the reference data and therefore abnormal, an abnormal lubricant feed section is determined on the basis of the time periods. Since a lubrication abnormality can be detected with its location, repair and restoration can be carried out easily.

FIG. 1

**Description**

BACKGROUND OF THE INVENTION

1. Field of the Invention

The present invention relates to an injection molding machine having a lubrication system for automatically feeding lubricant to relatively moving parts such as sliding parts and rotating parts of the injection molding machine.

2. Description of Related Art

Injection molding machines have many relatively moving parts such as sliding parts and rotating parts which need to be lubricated. It is arranged that these parts to be lubricated are automatically fed with lubricant at predetermined intervals or each time when a predetermined number of injections are completed.

As means for assuring that the parts to be lubricated are fed with lubricant properly, there is known an arrangement in which, if an output of the last stage of a progressive lubricant distributor or a parallel lubricant distributor does not reach a predetermined pressure within a predetermined period from a start of lubrication, an alarm is issued indicating an abnormality such as clogging or breakage of a pipe in any of lubricant feeding sections of the progressive distributor or the parallel distributor (see JP 2002-127221A).

If the lubrication is not performed timely, it has an undesirable effect on a performance and a life of the injection molding machine. Hence, it is important to indicate that the lubrication has not been performed timely. The progressive distributor or the parallel distributor for feeding lubricant to the parts to be lubricated in the injection molding machine has many lubricant feeding sections. Hence, even if it is recognized that there is something abnormal with the progressive distributor or the parallel distributor from the fact that the output at the last stage of the progressive distributor or the parallel distributor does not reach the predetermined pressure, which of the lubricant feeding sections of the progressive distributor or the parallel distributor and which of the parts to be lubricated are abnormal cannot be determined. Thus, it takes a considerable time to determine and repair the abnormal section, and hence it takes a long time to restore the injection molding machine to resume the operation.

SUMMARY OF THE INVENTION

The present invention provides an injection molding machine having a lubrication system capable of determining which of lubricant feeding sections of the lubrication system is abnormal.

According to an aspect of the present invention, an injection molding machine comprises: a centralized lubrication device for feeding lubricant to a plurality of parts to be lubricated through a pipe system; a sensor provided in the pipe system of the centralized lubrication device, for detecting a flow rate or a pressure of the lubricant; storing means for storing the flow rate or the pressure detected by the sensor at predetermined intervals; and display control means for reading the flow rate or pressure stored by the storing means and displaying the read flow rate or pressure of the lubricant on a display device in the form of a graph in time series with time elapsed from a start of the lubrication. With the above arrangement, an operator can recognize an abnormality of lubrication.

The injection molding machine may further comprise setting means for setting a relation between the time elapsed from the start of the lubrication and the parts to be lubricated, and the display control means may display the read flow rate or the pressure of the lubricant on the display device with the parts to be lubricated to be associated with the time elapsed from a start of the lubrication. With this arrangement, an operator can easily find out a part to be lubricated having an abnormality of lubrication.

According to another aspect of the present invention, an injection molding machine comprises: a centralized lubrication device for feeding lubricant to a plurality of parts to be lubricated through a pipe system; a sensor provided in the pipe system of the centralized lubrication device, for detecting a flow rate or a pressure of the lubricant; storing means for storing the flow rate or pressure detected by the sensor at predetermined intervals; reference data storage means for storing, as reference data, values of the flow rate or the pressure of the lubricant stored by the storing means with time elapsed from a start of the lubrication when a normal lubrication is performed by the centralized lubrication device; comparison means for comparing the flow rate or the pressure of the lubricant detected by the sensor with the reference data stored in the reference data storage means from the start of the lubrication to determine an abnormality of lubrication; and informing means for issuing a notice of abnormality when the comparison means determines an abnormality of lubrication.

In this case, the injection molding machine may further comprise setting means for setting relation between the time elapsed from the start of the lubrication and the parts to be lubricated, and the informing means informs an indication on a part to be lubricated having an abnormality of lubrication based on time when the comparison means determines an abnormality of lubrication and the relation set by the setting means.

Further, a reference range may be set on the reference data by the setting means and the comparison means may determine an abnormality of lubrication when the flow rate or the pressure detected by the sensor deviates from the reference range.

BRIEF DESCRIPTION OF THE DRAWINGS

FIG. 1 is a block diagram schematically showing an embodiment of the invention;
FIGS. 2a-2d are diagrams for explaining a principle of operation of a quantity measuring valve of a parallel distributor in the embodiment;
FIG. 3 is a diagram showing a waveform which lubricant pressure describes when the parallel distributor operates normally;
FIG. 4 is a diagram showing a waveform which lubricant pressure describes when a pipe of the parallel distributor has a break;
FIG. 5 is a diagram showing a waveform which lubricant pressure describes when a pipe of the parallel distributor is clogged;
FIGS. 6a-6e are diagrams for explaining principles of how a progressive distributor in the embodiment operates;
FIG. 7 is a diagram showing a waveform which lubricant pressure describes when the progressive distributor operates normally;
FIG. 8 is a diagram showing a waveform which lubricant pressure describes when a pipe of the progressive distributor is clogged;
FIG. 9 is a diagram showing a waveform which lubricant pressure describes when a pipe of the progressive distributor has a break; and
FIG. 10 is a flowchart of a lubrication abnormality detection performed in the embodiment.

DETAILED DESCRIPTION

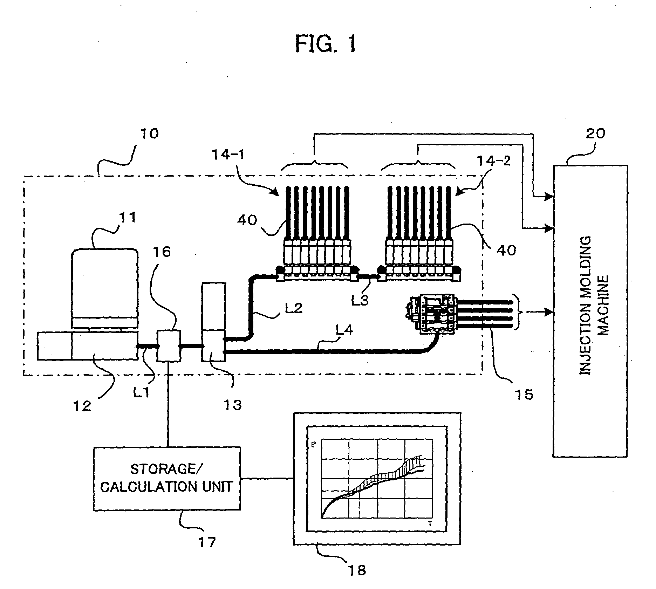

FIG. 1 is a block diagram showing relevant parts of a lubrication system of an injection molding machine according to an embodiment of the invention.

An injection molding machine 20 has a centralized lubrication device 10. The centralized lubrication device 10 includes parallel distributors (for main-pipe depressurizing centralized lubrication) 14-1 and 14-2, a progressive distributor (for pressure-progressive centralized lubrication) 15, a lubricant tank 11 for storing lubricant such as grease and oil, a pump 12, and a switching valve 13 for selectively allowing lubricant, which is fed from the lubricant tank 11 when the pump 12 is driven, to flow to the parallel distributors 14-1 and 14-2 or to the progressive distributor 15.

By the pump 12 being driven, the centralized lubrication device 10 feeds lubricant from the lubricant tank 11 through a pipe L1 to the switching valve 13. When the switching valve 13 is switched to a position connected to the parallel distributors 14-1 and 14-2, lubricant is fed through a pipe L2 to the parallel distributor 14-1, and further through a pipe L3 to the parallel distributor 14-2. When the switching valve 13 is switched to a position connected to the progressive distributor 15, lubricant fed by the pump 12 is fed through a pipe L4 to the progressive distributor 15. The lubricant fed to the parallel distributors 14-1, 14-2 and the progressive distributor 15 this way is fed from lubricant feeding sections of the distributors 14-1, 14-2 and 15 to individual parts to be lubricated of the injection molding machine 20.

In this embodiment, also a pressure sensor 16 for detecting the pressure of lubricant fed to the parallel distributors 14-1 and 14-2 or the progressive distributor 15 is provided in the pipe L1 between the pump 12 and the switching valve 13. The lubricant pressure detected by the pressure sensor 16 is fed to a storage/calculation unit 17, in which the lubricant pressure is stored as a function of time. The lubricant pressure detected by the pressure sensor 16 is sampled and stored at predetermined intervals after lubrication is started by the pump 12 being driven, and abnormality of the centralized lubrication device 10 is detected on the basis of the detected lubricant pressure as described later. The lubricant pressure stored as a function of time is fed to a display/input unit 18, where a graph is made in which, for example, time elapsed from the start of lubrication is plotted on the abscissa and the lubricant pressure is plotted on the ordinate. Using this graph, lubrication can be monitored to find out a lubrication abnormality. The storage/calculation unit 17 and the display/input unit 18 may be provided separately from a controller of the injection molding machine or provided in it. Alternatively, the storage/calculation unit 17 and the display/input unit 18 may be constructed by using the processors, storage means, display means, and input means already provided in the controller of the injection molding machine and adding some software.

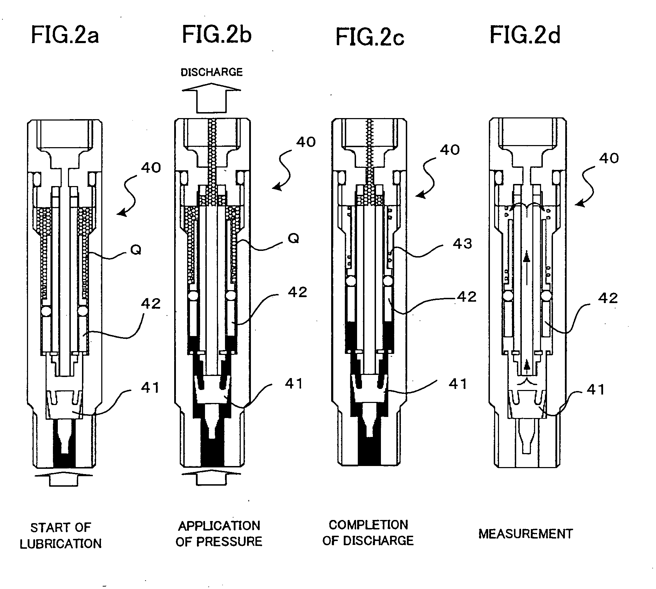

FIGS. 2a-2d are diagrams for explaining a principle of operation of a quantity measuring valve 40 which forms a lubricant feeding section. The parallel distributors 14-1 and 14-2 each have a plurality of quantity measuring valves 40. Since the quantity measuring valve is well-known in the art, how it operates will be described briefly.

FIG. 2a shows the state before lubrication is started. When the pump 12 operates and the pressure of the lubricant fed by the pump 12 increases, a valve 41 goes up and the pressure of the lubricant stored between the valve 41 and a piston 42 increases, which makes the piston 42 go up. When the piston 42 goes up, the lubricant Q measured and stored in a fore-end part inside an outer cylinder is discharged from a discharge opening. Thus, a predetermined quantity of lubricant is fed to a part to be lubricated in the injection molding machine (FIG. 2b). After the piston 42 reaches its top dead center and discharges the predetermined measured quantity of lubricant Q (FIG. 2c), the pressure of the lubricant fed by the pump 12 decreases, and the piston 42 goes down due to the repulsive force of a spring 43. As a result, the valve 41 is pushed down, and high-pressure lubricant flows through an inner pipe and is stored in the fore-end part inside the outer cylinder and thereby measured (FIG. 2c). Thus, the valve returns to the state shown in FIG. 2a, namely the standby state before the start of lubrication.

A plurality of quantity measuring valves of this type are arranged in parallel in each of the parallel distributors 14-1 and 14-2. Since flow resistance increases with pipe length, the pressure of the lubricant fed from the lubricant tank 11 by the pump 12 operating is lower at a position farther from the pump 12. Further, since the pressure at the discharge opening of the pump increases with time from the start of operation of the pump, a quantity measuring valve 40 nearer to the pump reaches the discharge pressure before a quantity measuring valve 40 farther from the pump does. Thus, lubricant is discharged from the quantity measuring valves 40 in order of the distance from the pump 12, with the nearest one first, and fed to parts to be lubricated in the injection molding machine.

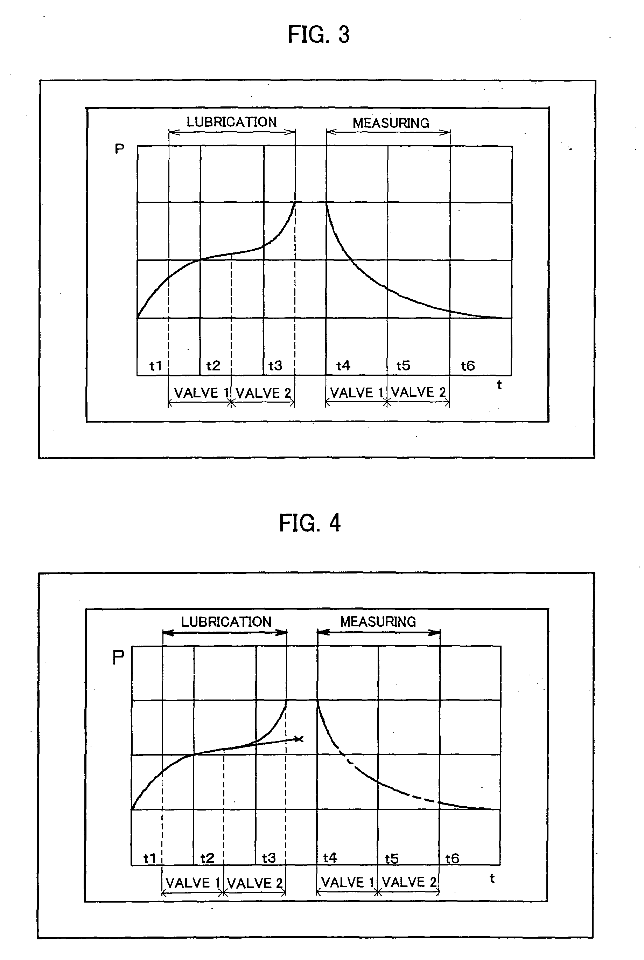

FIG. 3 shows an example of relationship between a waveform of the lubricant pressure measured by the pressure sensor 16 and discharge of lubricant from quantity measuring valves of the parallel distributor, which was obtained when lubrication was performed normally. In this example, the parallel distributor has two quantity measuring valves 40, of which a valve 1 is nearer to the pump 12.

When the pump 12 starts operation, the lubricant pressure near the pump discharge opening detected by the pressure sensor 16 increases gradually. After the pump 12 starts operation, at time t1, discharge of lubricant by the quantity measuring valve 1 starts. At time t2, discharge of lubricant by the quantity measuring valve 1 terminates and discharge of lubricant by the quantity measuring valve 2 starts. At time t3, discharge of lubricant by the quantity measuring valve 2 terminates. When the quantity measuring valves measure lubricant, the pressure of lubricant decreases. The pressure of lubricant decreases at the quantity measuring valve nearer to the pump 12, first. Thus, at time t4, the quantity measuring valve 1 starts measurement. At time t5, the quantity measuring valve 1 finishes measurement and the quantity measuring valve 2 starts measurement. At time t6, the quantity measuring valve 2 finishes measurement. Like this, the quantity measuring valves of the parallel distributor start discharge and measurement in order of the distance from the pump 12 which is a lubricant supply source, with the nearest one first.

The waveform of the lubricant pressure shown in FIG. 3 is the waveform which the lubricant pressure describes when the parallel distributor operates normally. When the parallel distributor or a pipe connected with it is clogged or has a break or the like, the lubricant pressure describes a waveform different from this waveform in normal operation.

For example, if a pipe behind the quantity measuring valve 1 has a break, even when the quantity measuring valve 1 operates normally, the quantity measuring valve 2 does not operate normally due to the break. As shown in FIG. 4, the lubricant pressure detected by the pressure sensor 16 does not increase, and describes a waveform different from the waveform in normal operation. When there is only one or so break and it is small, the lubricant pressure may increase though it takes longer. Even in this case, the waveform of the lubricant pressure is different from that in normal operation.

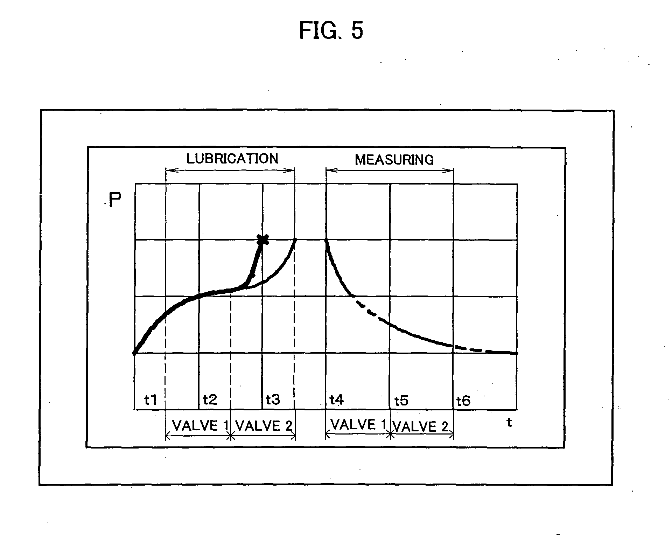

For example, if a pipe behind the quantity measuring valve 1 is clogged, the quantity measuring valve 1 operates normally but the quantity measuring valve 2 does not due to the clogged part. As shown in FIG. 5, the lubricant pressure increases rapidly. When the quantity measuring valve 2 operates normally, the lubricant pressure should increase moderately. However, since there is a clogged part, lubricant cannot flow forward and the lubricant pressure increases rapidly.

Thus, the waveform of the lubricant pressure, as shown in FIG. 3, which is obtained in normal operation is used as reference data. Considering that the waveform varies in dependence on the temperature of lubricant and the other factors, a reference range may be set on the reference data. If the detected lubricant pressure is not within the reference range, it is determined that there is an abnormality in a lubricant feeding passage of the parallel distributor. For example, a reference range between the two waveforms obtained by adding +ΔP and -ΔP' to the reference data (waveform of the lubricant pressure detected in normal operation), respectively, (or in other words, the two waveforms obtained by shifting the reference data (waveform) along the ordinate by +ΔP and -ΔP', respectively) is set, and if the waveform of the detected lubricant pressure deviates from the reference range, it is determined that there is an abnormality. The absolute values of +ΔP and -ΔP' may be the same.

Further, location of an occurrence of abnormality can be determined depending on where the waveform of the detected lubricant pressure deviates from the reference range. As shown in FIGS. 4 and 5, while the quantity measuring valve 1 is operating and discharging lubricant, the waveform of the lubricant pressure is almost the same as the reference data (waveform) and within the reference range. However, if the waveform deviates from the reference range in a time period in which the quantity measuring valve 2 is operating, it can be determined that the quantity measuring valve 1 is normal but the quantity measuring valve 2 is abnormal. Hence, it can be determined that there is an abnormality such as a pipe being clogged with lubricant or a pipe having a break in an area related to the quantity measuring valve 2.

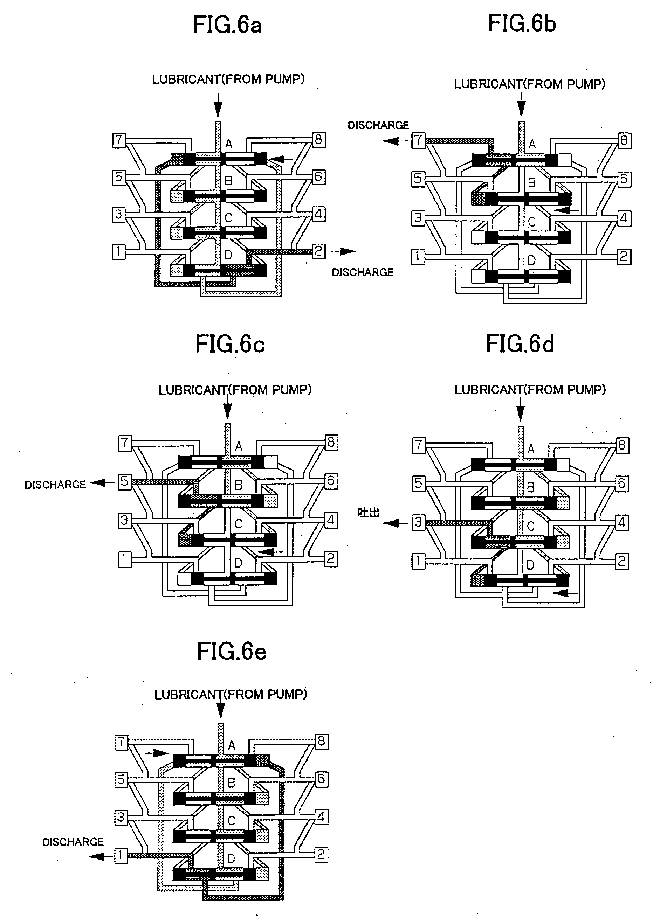

FIGS. 6a-6e are illustrations for explaining principles of how a progressive distributor (for pressure-progressive centralized lubrication) 15 operates. Since the progressive distributor 15 is a well-known and conventional one, it will be described briefly.

As shown in FIG. 6a, the pressure of lubricant fed by the pump 12 being driven first acts on the right side of a piston A and moves the piston A to the left. As a result, lubricant stored on the left side of the piston A is discharged from a port 2 and fed to a predetermined part to be lubricated. As shown in FIG. 6b, when the piston A reaches the left end, the pressure of the lubricant fed by the pump 12 acts on the right side of a piston B and moves the piston B to the left, so that lubricant is discharged from a port 7. As shown in FIG. 6c, when the piston B reaches the left end, the pressure of the lubricant acts on the right side of a piston C and moves the piston C to the left, so that lubricant is discharged from a port 5. Then, as shown in FIG. 6d, the pressure of the lubricant acts on the right side of a piston D and moves the piston D to the left, so that lubricant is discharged from a port 3. Then, as shown in FIG. 6e, the pressure of the lubricant acts on the left side of the piston A and moves the piston A to the right, so that lubricant is discharged from a port 1.

Likewise, lubricant is discharged from ports 8, 6 and 4 in this order and the progressive distributor 15 returns to the state of FIG. 6a. To sum up, the progressive distributor 15 discharge lubricant from ports 2, 7, 5, 3, 1, 8, 6 and 4 in this order. When the operation period of the pump 12 is long, this discharge cycle is repeated many times. Hence, the operation period of the pump is determined according to the quantity of lubricant which needs to be fed.

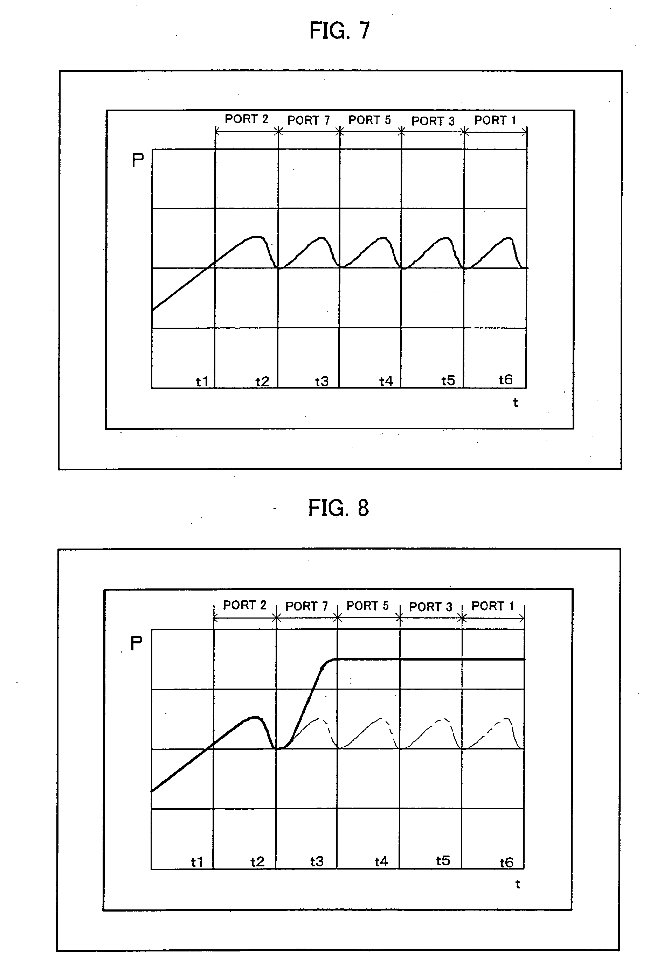

FIG. 7 shows a waveform which the lubricant pressure detected by the pressure sensor 16 describes when the progressive distributor 15 operates normally. In the progressive distributor 15, pistons operate and discharge lubricant from their associated ports in order. Hence, as shown in FIG. 7, the pressure describes a series of chevrons corresponding to the ports discharging lubricant in order.

In this progressive distributor 15, if a pipe is clogged or has a break, the waveform which the lubricant pressure detected by the pressure sensor 16 describes varies much. It is not always like the waveform shown in FIG. 7. For example, if a pipe connected to the port 7 is clogged, lubricant is discharged from the port 2 normally, during which the lubricant pressure describes a waveform like that of FIG. 7. However, since the pipe connected to the port 7 is clogged, the lubricant pressure does not decrease but increases, unlike the waveform shown in FIG. 7. Thus, the lubricant pressure continues to be high as shown in FIG. 8.

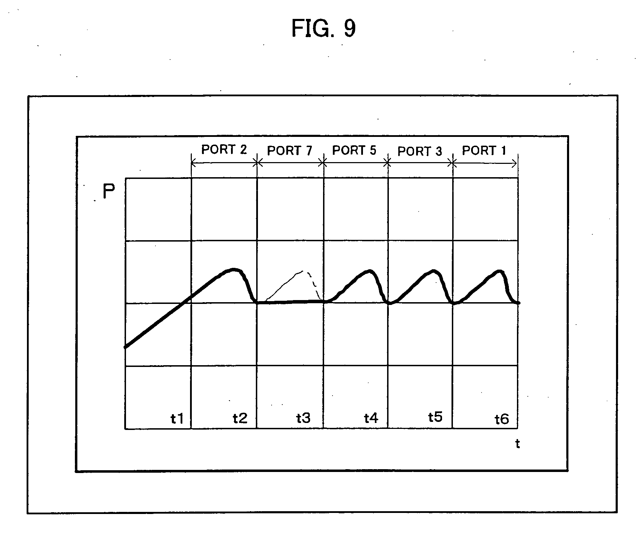

If a pipe has a break, the lubricant pressure does not increase as shown in FIG. 9. Also in this case, the location of the break in a pipe can be determined from the fact that the lubricant pressure does not increase in a time period in which it should normally increase. In the example shown in FIG. 9, it is determined that the distributor operated normally until lubricant was discharged from the port 2. However, since the detected lubricant pressure does not increase in the time period in which lubricant should be discharged from the port 7, and is outside the reference range, it is determined that a pipe connected to the port 7 has a break.

Specifically, like the case with the parallel distributors 14-1 and 14-2, the waveform as shown in FIG. 7 which the lubricant pressure describes when the progressive distributor 15 operates normally is used as reference data (waveform), and a reference range is provided on the basis of the reference data. When the waveform of the detected lubricant pressure is not within the reference range as shown in FIGS. 8 and 9, the location of a clogged part (in the example of FIG. 7, the clogged part is in the pipe through which lubricant should flow to the port 7) can be determined on the basis of the time when the waveform went out of the reference range.

Thus, when the parallel distributors 14-1, 14-2 and the progressive distributor 15 are operating normally, the lubricant pressure detected by the pressure sensor 16 is sampled and stored in the storage/calculation unit 17 at predetermined intervals after lubrication is started, or in other words, the pump 12 starts to be driven. The stored lubricant pressure is used as reference data. Further, on the basis of the reference data, a reference range is set by adding $+\Delta P$ and $-\Delta P'$ to the reference data (the absolute values of $+\Delta P$ and $-\Delta P'$ may be the same). Further, time periods are measured in advance on the basis of the timings at which the individual lubricant feeding sections of the parallel distributors 14-1, 14-2 and progressive distributor 15 start lubrication to their corresponding parts to be lubricated (the pump 12 starts operating). These time periods are set through the display/input unit 18.

Then, after the pump 12 starts to be driven, the lubricant pressure is detected by the pressure sensor 16 and stored at predetermined intervals. The waveform which the stored lubricant pressure describes in a coordinate system of which the abscissa and ordinate represent time and lubricant pressure, respectively, is displayed on a screen of the display/input unit 18. On the screen, also the reference data (waveform) and the reference range determined by shifting the reference data (waveform) by $+\Delta P$ and $-\Delta P'$ are displayed, for example, in different colors. Further, the time periods in which the individual lubricant feeding sections feed lubricant to their associated parts to be lubricated are displayed on the screen.

Thus, what are displayed are monitored, and when the waveform of the detected lubricant pressure is within the reference range, it is determined that lubrication has been performed normally. When the waveform of the detected lubricant pressure is not within the reference range, it is determined that there is a lubrication abnormality. The location of an abnormal part (including a lubricant feeding section and a pipe connected thereto) can be determined on the basis of the time period in which the waveform deviates from the reference range.

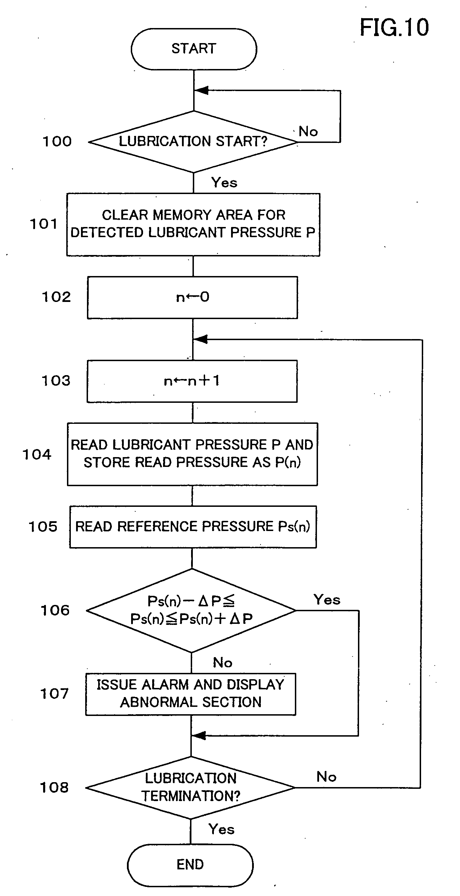

It may be so arranged that abnormality is determined automatically by the storage/calculation unit 17. FIG. 10 is a flowchart showing processing of abnormality determination to be performed by a processor in the storage/calculation unit 17.

First, when lubrication is being performed normally, the lubricant pressure is detected by the pressure sensor 16 at predetermined intervals after lubrication is started (the pump 12 starts to be driven), and the detected lubricant pressure is stored as reference pressure Ps. Also, the reference range is set in advance by adding $+\Delta P$ and $-\Delta P$ to the reference data. Further, as described above, the time periods in which the individual lubricant feeding sections of the parallel distributors 14-1, 14-2 and the progressive distributor 15 feed lubricant to their corresponding parts to be lubricated, which are measured in advance, is set through the display/input unit 18.

It is determined whether or not a lubrication command has been issued from a host controller such as the controller of the injection molding machine (Step 100). When the lubrication command is sent out and the pump 12 is driven, a memory area for storing the detected lubricant pressure P is cleared (Step 101). Then, an indicator n for indicating sampling time is set at "0" (Step 102). Sampling is performed at every predetermined sampling period. Then, "1" is added to the value of the indicator n (Step 103). Then, the lubricant pressure P detected by the pressure sensor 16 is read, and stored as the lubricant pressure P(n) detected at the sampling time n indicated by the indicator "n" (Step 104).

Further, reference data Ps(n) corresponding to the indicator n is read (Step 105), and whether the detected lubricant pressure P(n) is within the reference range corresponding to the reference data Ps(n) or not is determined (Step 106). Specifically, the determination is made according the following formula (1):

$$Ps(n)-\Delta P \leq P(n) \leq Ps(n)+\Delta P \qquad (1).$$

If the detected lubricant pressure P(n) is within the reference range, or in other words, if it satisfies the above formula (1), it is determined whether or not a lubrication termination command is issued from the host controller. If not, the procedure returns to Step 103, and then Steps 103 to 108 are performed at every predetermined processing period.

If it is determined at Step 106 that the detected lubricant pressure P(n) is not within the reference range, an alarm is given. Further, the time period to which the detected lubricant pressure P(n) belongs is determined on the basis of the present value of the indicator n, and which of the lubricant feeding sections of the parallel distributors 14-1, 14-2 and progressive distributor 15 was operating in that time period is determined. The abnormal lubricant feeding section and its associated part to be lubricated thus determined are displayed (Step 107).

Although not shown in FIG. 10, when a display command is fed, the stored reference data, the waveform of the detected lubricant pressure and the time periods in which lubricant is fed to the individual parts to be lubricated are displayed.

In the above-described embodiment, on the basis of the lubricant pressure detected near the discharge opening of the pump which feeds lubricant to the parallel distributors 14-1, 14-2 and the progressive distributor 15, a lubrication abnormality and its location is determined. In place of the lubricant pressure, the lubricant flow rate may be measured.

According to the present invention, an abnormality of lubrication and further a section of an automatic lubrication device having an abnormality of lubrication can be determined. Hence, it is easy to determine and repair an abnormal part, and the time required for restoring the injection molding machine to resume operation is short.

## Claims

1. An injection molding machine having a plurality of parts to be lubricated, comprising:

   a centralized lubrication device for feeding lubricant to the plurality of parts through a pipe system;
   a sensor provided in the pipe system of said centralized lubrication device, for detecting a flow rate or a pressure of the lubricant;
   storing means for storing the flow rate or the pressure detected by said sensor at predetermined intervals; and
   display control means for reading the flow rate or pressure stored by said storing means and displaying the read flow rate or pressure of the lubricant on a display device in the form of a graph in time series with time elapsed from a start of the lubrication.

2. An injection molding machine according to claim 1, further comprising setting means for setting a relation between the time elapsed from the start of the lubrication and the parts to be lubricated, wherein said display control means displays the read flow rate or the pressure of the lubricant on the display device with the parts to be lubricated to be associated with the time elapsed from a start of the lubrication.

3. An injection molding machine having a plurality of parts to be lubricated, comprising:

   a centralized lubrication device for feeding lubricant to the plurality of parts through a pipe system;

a sensor provided in the pipe system of said centralized lubrication device, for detecting a flow rate or a pressure of the lubricant;

storing means for storing the flow rate or pressure detected by said sensor at predetermined intervals;

reference data storage means for storing, as reference data, values of the flow rate or the pressure of the lubricant stored by said storing means with time elapsed from a start of the lubrication when a normal lubrication is performed by said centralized lubrication device;

comparison means for comparing the flow rate or the pressure of the lubricant detected by said sensor with the reference data stored in said reference data storage means from the start of the lubrication to determine an abnormality of lubrication; and

informing means for issuing a notice of abnormality when said comparison means determines an abnormality of lubrication.

4. An injection molding machine according to claim 3, further comprising setting means for setting relation between the time elapsed from the start of the lubrication and the parts to be lubricated,

wherein said informing means informs an indication on a part to be lubricated having an abnormality of lubrication based on time when said comparison means determines an abnormality of lubrication and the relation set by said setting means.

5. An injection molding machine according to claim 3 or 4, wherein a reference range is set on the reference data by said setting means and said comparison means determines an abnormality of lubrication when the flow rate or the pressure detected by said sensor deviates from the reference range.

## FIG. 1

# FIG.2a  FIG.2b  FIG.2c  FIG.2d

DISCHARGE

40

Q

42

41

START OF
LUBRICATION

40

Q

42

41

APPLICATION
OF PRESSURE

40

43

42

41

COMPLETION
OF DISCHARGE

40

42

41

MEASUREMENT

## FIG. 3

## FIG. 4

FIG. 5

# FIG.6a

# FIG.6b

# FIG.6c

# FIG.6d

# FIG.6e

## FIG. 7

## FIG. 8

# FIG. 9

FIG.10

START

100     LUBRICATION START?    No

Yes

101     CLEAR MEMORY AREA FOR DETECTED LUBRICANT PRESSURE P

102     $n \leftarrow 0$

103     $n \leftarrow n+1$

104     READ LUBRICANT PRESSURE P AND STORE READ PRESSURE AS P(n)

105     READ REFERENCE PRESSURE Ps(n)

106     $Ps(n) - \Delta P \leqq Ps(n) \leqq Ps(n) + \Delta P$    Yes

No

107     ISSUE ALARM AND DISPLAY ABNORMAL SECTION

108     LUBRICATION TERMINATION?    No

Yes

END

**European Patent Office**

## EUROPEAN SEARCH REPORT

Application Number

EP 04 25 0415

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 2000, no. 15, 6 April 2001 (2001-04-06) -& JP 2000 356297 A (TOYO MACH & METAL CO LTD), 26 December 2000 (2000-12-26) * abstract; figures 1-7 * | 1-5 | B29C45/83 |
| A | EP 0 931 974 A (FANUC LTD) 28 July 1999 (1999-07-28) * column 9, paragraph 0052 - column 10, paragraph 0053 * | 1-5 | |
| D,A | PATENT ABSTRACTS OF JAPAN vol. 2002, no. 09, 4 September 2002 (2002-09-04) & JP 2002 127221 A (NIIGATA ENG CO LTD), 8 May 2002 (2002-05-08) * abstract * | 1-5 | |
|  |  |  | TECHNICAL FIELDS SEARCHED (Int.Cl.7) |
|  |  |  | B29C |

The present search report has been drawn up for all claims

| Place of search | Date of completion of the search | Examiner |
|---|---|---|
| Munich | 28 April 2004 | Lanz, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

ANNEX TO THE EUROPEAN SEARCH REPORT
ON EUROPEAN PATENT APPLICATION NO.          EP 04 25 0415

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2004

| Patent document cited in search report | | Publication date | Patent family member(s) | | Publication date |
|---|---|---|---|---|---|
| JP 2000356297 | A | 26-12-2000 | NONE | | |
| EP 0931974 | A | 28-07-1999 | JP<br>EP<br>US | 11268093 A<br>0931974 A1<br>6179597 B1 | 05-10-1999<br>28-07-1999<br>30-01-2001 |
| JP 2002127221 | A | 08-05-2002 | JP | 3513703 B2 | 31-03-2004 |